# EUROPEAN PATENT APPLICATION

(11) **EP 1 146 265 A2**
(43) Date of publication of application: **17.10.2001**
(21) Application number: 01107872.2
(22) Date of filing: 10.04.2001
(51) Int. Cl.: F16J 15/32

(54) **Shaft seal**

(30) Priority: 12.04.2000 JP 2000111107; 12.07.2000 JP 2000210808; 28.12.2000 JP 2000399930
(71) Applicant: Mitsubishi Cable Industries, Ltd., Amagasaki-shi Hyogo 660-0856 (JP); Kabushiki Kaisha Toyoda Jidoshokki Seisakusho, Aichi-ken (JP)
(72) Inventor: Hosokawa, Atsushi, Minoshima Factory, Arida-shi, Wakayama (JP); Inagaki, Tomoya, Minoshima Factory, Arida-shi, Wakayama (JP); Obata, Hiromi, Minoshima Factory, Arida-shi, Wakayama (JP); Imai, Takayuki, Kariya-shi, Aichi-ken (JP); Yamada, Takeshi, Kariya-shi, Aichi-ken (JP)
(74) Representative: HOFFMANN - EITLE

(57) **Abstract**

A shaft seal provided with a front seal member (5), disposed on a fluid storing chamber (33) side and having a lip end portion (13b) of rubber which slides on a rotation shaft (32) in rotation state. And the shaft seal is provided with a rear seal member (25) disposed on a low pressure side (42) and having a lip end portion (27b) of rubber which contacts the rotation shaft (32) in static state.

## Description

This invention relates to a shaft seal, especially, a shaft seal used for sealing high pressure fluid such as CO₂ in a compressor for an air conditioner on an automobile.

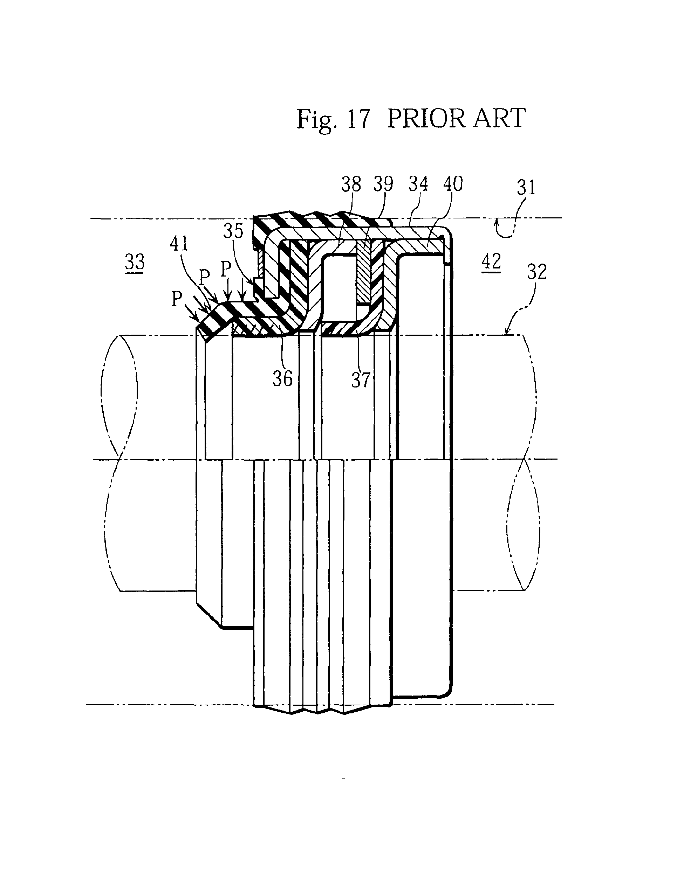

As a conventional shaft seal of this kind, a shaft seal as shown in Figure 17 is known. This rotation shaft seal is disposed between a housing 31 such as a case of a compressor and a rotation shaft 32 for sealing fluid or gas in a fluid storing chamber 33.

In the construction of the shaft seal, a seal member 35 made of rubber is adhered to an outer case 34, and a first seal element 36 and a second seal element 37 having spiral grooves are unified with a first inner case 38, a washer 39, a second inner case 40, etc. in the outer case 34 by caulking.

The seal member 35 made of rubber is provided with a lip end portion 41 gradually diminishes in diameter to the fluid storing chamber 33 side. And, a tip of the lip end portion 41 contacts the rotation shaft 32 as to make a line contact to seal.

In both of rotation state and static state of the rotation shaft 32, one unit of the seal member 35 made of rubber (the lip end portion 41) seals. And, for sealing in the rotation state, an inner peripheral dimension of the lip end portion 41 is set to be smaller than an outer peripheral dimension of the rotation shaft 32 in a free state. That is to say, the seal has an interference.

And, when the rotation shaft 32 rotates, even if slight leakage is generated on a sliding position of the tip of the lip end portion 41 and the rotation shaft 32, the leakage of the fluid is pushed back to the left side in Figure 17 by hydrodynamic effect (pumping work) of the spiral grooves (screw threads) of the first seal element 36 and the second seal element 37 to conduct sealing as the whole shaft seal in the rotation.

In the conventional shaft seal as described above, the lip end portion 41 contacts the rotation shaft 32 with a large area for great (excessive) deformation by high pressure working in an arrow P direction in Figure 17, sealability becomes unstable. Further, of the tip of the lip end portion 41 is gradually abraded for sliding on the rotation shaft 32 in rotation (in the rotation state) with high pressure.

When the tip is abraded, sealing effect (sealability) in the static state of the rotation shaft 32 is spoiled, and leakage of the fluid to an atmosphere side (low-pressure side) is generated.

Although a first seal element 36 and a second seal element 37 are provided in Figure 17, sealing effect (sealability) in the static state is not expectable. That is to say, the seal elements 36 and 37 are mainly composed of PTFE, filled with various filling materials for improvement of strength and anti-abrasiveness, having rough surface even if they are finished with polishing, and not able to completely seal the leakage in the static state for their inferiority in tight contact with the rotation shaft 32.

In other words, in the conventional shaft seal has a construction in which the tip of the lip end portion 41 of one unit of the seal member 35 made of rubber conducts sealing work in operation (rotation) and in the static state of the rotation shaft 32. However, sliding abrasion in the rotation is strong for sealing the high pressure fluid, and leakage is generated in the static state (although the seal is tight in the rotation).

It is therefore an object of the present invention to provide a shaft seal which prevents the contact with the rotation shaft in a large area by restriction of the excessive deformation of the lip end portion caused by high pressure to keep stable sealability, and has stable and good sealing work (sealing function) not only in rotation but in static state.

It is another object of the present invention to provide a shaft seal which can artfully seal a fluid of which pressure in the static state is higher than that in the rotation of the rotation shaft.

These objects are solved according to the present invention by shaft seal including features of claim 1, 2, 5, or 6. Furthermore detailed embodiments are described in the dependent claims 3, 4, 7, 8, 9, 10, 11, and 12.

The present invention will be described with reference to the accompanying drawings in which:
Figure 1 is a longitudinal cross-section of a principal portion showing a first embodiment of the present invention;
Figure 2 is a longitudinal cross-section of a principal portion showing a second embodiment of the present invention;
Figure 3 is a longitudinal cross-section of a principal portion showing a third embodiment of the present invention;
Figure 4 is a longitudinal cross-section of a principal portion showing a fourth embodiment of the present invention;
Figure 5 is a longitudinal cross-section of a principal portion showing a fifth embodiment of the present invention;
Figure 6 is a longitudinal cross-section of a principal portion showing a sixth embodiment of the present invention;
Figure 7 is a longitudinal cross-section of a principal portion showing a seventh embodiment of the present invention;
Figure 8 is a longitudinal cross-section of a principal portion showing a eighth embodiment of the present invention;
Figure 9 is a longitudinal cross-section of a principal portion showing a ninth embodiment of the present invention;
Figure 10 is a longitudinal cross-section of a principal portion showing a tenth embodiment of the present invention;
Figure 11 is a longitudinal cross-section of a principal portion showing a eleventh embodiment of the present invention;
Figure 12 is a longitudinal cross-section of a principal portion showing a twelfth embodiment of the present invention;
Figure 13 is a longitudinal cross-section of a principal portion showing a thirteenth embodiment of the present invention;
Figure 14 is a longitudinal cross-section of a principal portion showing a fourteenth embodiment of the present invention;
Figure 15 is a longitudinal cross-section of a principal portion showing a fifteenth embodiment of the present invention;
Figure 16 is a longitudinal cross-section of a principal portion showing a sixteenth embodiment of the present invention; and
Figure 17 is a half side view showing a conventional example.

Preferred embodiments of the present invention will now be described with reference to the accompanying drawings.

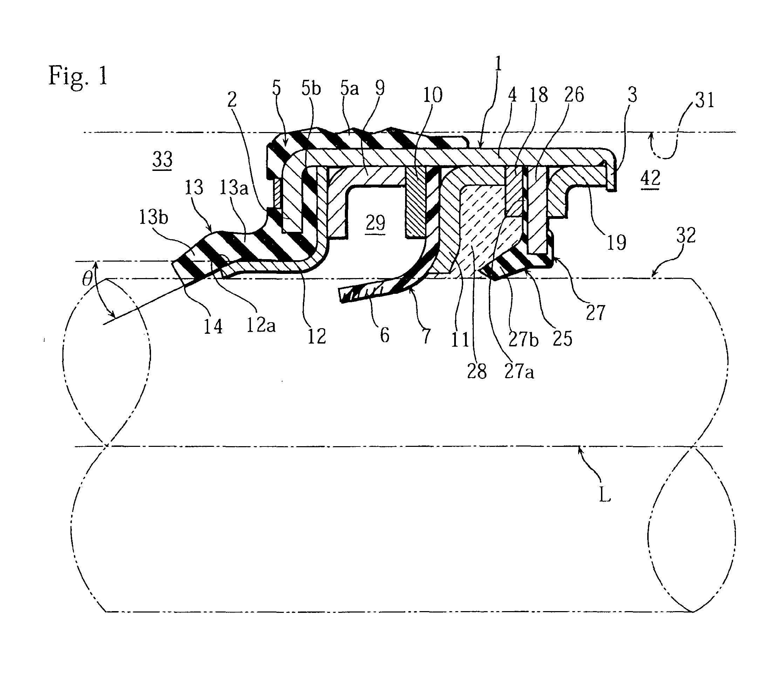

Figure 1 shows a first preferred embodiment of a shaft seal relating to the present invention, which is used for a compressor of air conditioner for automobiles in which a high pressure cooling medium (such as CO₂) works on a fluid storing chamber 33 side. This rotation shaft seal is disposed between a housing 31 such as a case of the compressor and a rotation shaft 32 (on its peripheral face) to seal fluid such as high pressure cooling medium.

Only a half cross section of the shaft seal is shown in Figure 1 in which the rotation shaft 32 and the housing 31 are shown with two-dot broken lines. And, a configuration of the shaft seal in unattached state (free state) is shown in Figure 1, while each part of the shaft seal is elastically deformed in attached state in which the shaft seal is disposed between the rotation shaft 32 and the housing 31.

To explain the construction concretely, in Figure 1, the shaft seal is composed of an outer case 1 made of metal having inner brim portions 2 and 3, a front seal member 5 made of rubber fixed to and unified with a peripheral face of a cylinder portion 4 of the outer case 1 and both sides of the inner brim portion 2 on a front (a fluid storing chamber 33) side by adhesion, welding, heat molding, etc., a seal element 7 having a spiral groove 6, and a rear seal element 25 on a low pressure (atmosphere) side 42, which is called rear side below.

To explain further in detail, a supporting metal 12 (supporting the front seal member 5), a first inner case 9, a first washer 10, a second inner case 11, a second washer 18, and a third inner case 19 are added.

The seal member 5 made of rubber is having a lip portion 13 extended to the fluid storing chamber 33 side, namely a front side, and a lip end portion 13b of the lip portion 13 slides on a peripheral face of the rotation shaft 32 (in rotation).

The rear seal element 25 is composed of a flat ring portion 26 made of (washer-shaped) metal and a rubber portion 27 unified with a front side and an inner peripheral edge of the flat ring portion 26 by adhesion, welding, heat molding, etc. The rubber portion 27 has a front wall portion 27a unified with a front face of the flat ring portion 26 and a lip end portion 27b (of rubber) extended from a position of the inner peripheral edge of the flat ring portion 26 to the front side. The lip end portion 27b contacts the peripheral face of the rotation shaft 32 in static state in which a hollow chamber 28 shown with an inclined broken line in Figure 1 is filled with pressurized fluid (this is occasionally called static pressurized state) to seal.

An interference of the lip end portion 27b of rubber of the rear seal member 25 is preferably arranged to be zero or minus. That is to say, the rear seal member 25 does not have to function in the rotation because sealing is conducted with the front seal member 5 and the seal element 7 when the rotation shaft 32 is in rotation. Therefore, the interference of the rear seal member 25 is arranged to be zero, or, considering axial deviation, slightly minus, namely, as to have a micro interval between the tip of the lip end portion 27b and the rotation shaft 32 in unpressurized state. And, in the static pressurized state, the tip of the lip end portion 27b of the rear seal member 25 is touched and pressed by the rotation shaft 32 to demonstrate sealing function (sealability). Therefore, the rear seal member 25 has the lip end portion 27b for static leakage prevention.

And, as clearly shown in Figure 1, the interference of the front seal member 5 is larger than that of the rear seal member 25, and the front seal member 5 functions as a main seal member working in both of the rotation state and the static state.

To add explanations on Figure 1, the front seal member 5 unitedly fixed to a front half of the outer case 1 is, to seal by elastic contact with the inner peripheral face of the housing 31, composed of a cylindrical cover portion 5a of which peripheral face is formed into undulation (in the free state), an inner brim cover portion 5b of which cross section is U-shaped and covering both sides of the front inner brim portion 2, and a lip portion 13 is protruding from an inner peripheral side of the cover portion 5b to the fluid storing chamber 33 (front) side.

Further, the lip portion 13 is composed of a short cylinder portion 13a and a lip end portion 13b gradually diminishing in diameter to the fluid storing chamber 33 side (inclined to the front and inner side), and the lip portion 13 has a L-shaped configuration. A tip end 14 of the lip end portion 13b makes a line contact with the peripheral face of the rotation shaft 32 to seal in attached (used) state.

The supporting metal 12, of which cross section is approximately L-shaped, supports a rear side wall portion or inner peripheral portion of the inner brim cover portion 5b of the front seal member 5 and the lip end portion 13b. The first inner case 9 of L-shaped cross section, the first washer 10, the second inner case 11 of L-shaped cross section, the second washer 18, the rear seal member 25, and the third inner case 19 are successively disposed after the supporting metal 12, and fixed (held) between the front and rear inner brim portions 2 and 3 by bending the inner brim portion 3 of the outer case 1 with plastic working.

As described above, the seal element 7 is sandwiched and held by the first washer 10 and the second inner case 11, and the rear seal member 25 is sandwiched and held by the second washer 18 and the third inner case 19. In this case, the front wall portion 27a of the rubber portion 27 is press-fitted to the second washer 18 to keep tightness (sealability) and prevent leakage between a peripheral edge portion of the rear seal member 25 and the inner face of the outer case 1 toward the low pressure side (atmosphere side) 42.

And, the seal element 7 is disposed on a central position in a longitudinal direction (a direction of an axis L of the rotation shaft 32) in Figure 1 to form two spaces, namely, a front hollow chamber 29 and the rear hollow chamber 28.

Adding explanations on the supporting metal 12, the supporting metal 12 is playing a role (work or function) as a gas-shielding member, a role (work or function) to prevent sealed fluid from permeating by fitting to (contact) to a rear face or inner face of the front seal member 5 on approximately whole area except near the tip end 14 of the front seal member 5 in Figure 1. That is to say, the role (work or function) of the supporting metal (backup ring) 12 as the gas-shielding member becomes important when cooling medium gas having relatively high permeability against rubber and resin such as CO₂ is used as the fluid in the fluid storing chamber 33.

Further, as clearly shown in Figure 1, the lip end portion 13b of the front seal member 5 inclines (as to diminish in diameter forward) to the axis L of the rotation shaft 32 with a predetermined inclination angle *θ.* The inclination angle θ is preferably to be 10° ≦ θ ≦ 45° . And, the supporting metal 12 has a slope receiving face 12a on its forth end to receive the inclined lip end portion 13b from the inner face (rear side). The inclination angle of the slope receiving face 12a is set to be the same as the angle θ above.

As described above, the slope receiving face 12a of the supporting metal 12 receives (holds) the back face (inner face) of the lip end portion 13b to prevent excessive deformation when the lip end portion 13b receives pressure as to demonstrate excellent sealability (tightness) and durability. Especially, contact area of the tip end 14 with the rotation shaft 32 in rotation is prevented from increasing, heat-generation and abrasion are prevented, and life of the front seal member 5 is extended.

If the inclination angle θ is less than the minimum value above (10 ° ), the lip end portion 13b becomes (excessively) long, and it is difficult to keep the line contact when the tip end 14 receives the pressure. On the contrary, when the inclination angle θ is more than the maximum value (45 ° ), the lip end portion 13b becomes too small to correspond to increase and decrease of the pressure in the fluid storing chamber 33, and the sealability is decreased thereby.

In short, the shaft seal shown in Figure 1 is provided with the seal element 7 (made of synthetic resin) disposed between the housing 31 and the rotation shaft 32 and having the spiral groove 6, the front seal member 5 disposed on the front side of the seal element 7 and having the lip end portion 13b made of rubber which slides on the rotation shaft 32, and the rear seal member 25 disposed on the low pressure side 42 and having the lip end portion 27b made of rubber which contacts the rotation shaft 32 in the static pressurized state. And, the front seal member 5 seals in operation (rotation) and in the static state of the seal, and the rear seal member 25 is mainly for leakage prevention in the static state. And, the seal element 7 between the two seal members sends the fluid in the rear hollow chamber 28 in the static state to the front hollow chamber 29 and the fluid storing chamber 33 side with pumping work (hydrodynamic work) of the spiral groove 6.

Materials for the above composition members are as follows. Metals such as steel are used for the material of the supporting metal 12, the outer case 1, the first inner case 9, the second inner case 11, the third inner case 19, the first washer 10, the second washer 18, the flat ring portion 26. And, the seal element 7 is made of fluororesin such as PTFE, and the front seal member 5 and the rear seal member 25 are, considering durability against cooling media, made of HNBR of which JIS hardness is preferably set to be 87 to 96. If the JIS hardness is less than 87, deformation becomes excessive. And, when the hardness is more than 96, elasticity becomes insufficient.

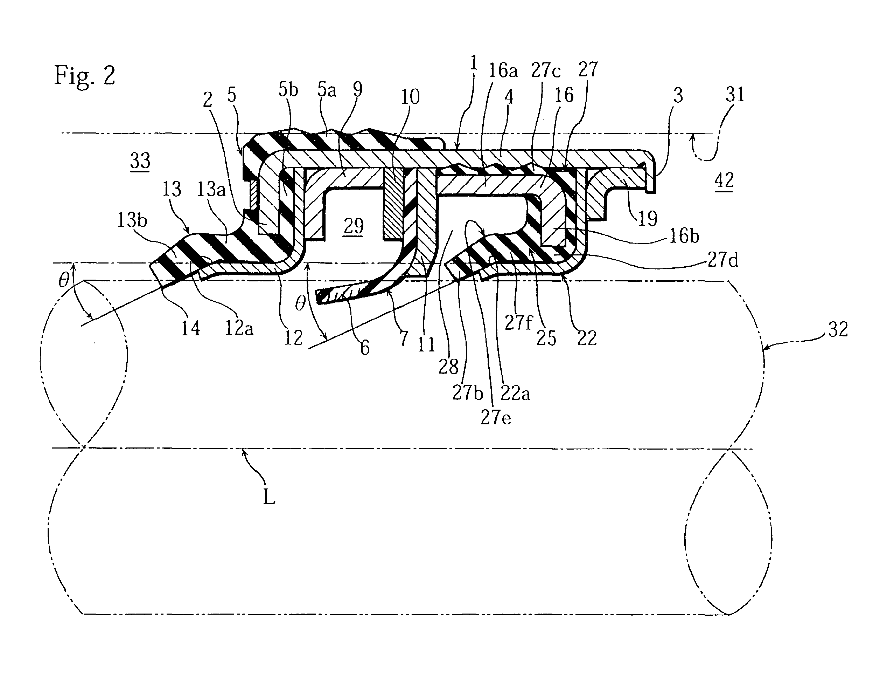

Next, in a second embodiment shown in Figure 2, although explanation of the members in the front half on the fluid storing chamber 33 side shown with the same marks is omitted, differences in the rear seal member 25 disposed on the atmosphere side (low pressure side) 42 and in the members supporting the rear seal member are described below.

In Figure 2, the rear seal member 25 has the rubber portion 27 and the metal portion 16 having different configurations from that in Figure 1, and a supporting metal 22 is provided. The metal portion 16 has an L-shaped cross section as that the flat ring portion 26 and the second washer 18 and a part of the second inner case 11 in Figure 1 are unified. The rubber portion 27 is composed of a cylindrical cover portion 27c having an undulate portion covering a peripheral face of a cylinder portion 16a of the metal portion 16, an inner brim cover portion 27d (having U-shaped cross section) covering an inner brim portion 16b of the metal portion 16, and a lip portion 27e continuing from the inner brim cover portion 27d as to extend forward. The lip portion 27e is composed of a short cylinder portion 27f parallel to the axis L and a lip end portion 27b which diminishes in diameter forward, and having a configuration similar to that of the lip portion 13 of the front seal member 5.

And, configuration and function of the supporting metal 22 are the same as that of the supporting metal 12 described with Figure 1. That is to say, the supporting metal 22 is also playing the role (work or function) as a gas-shielding member against cooling media such as CO₂. Double gas-shielding is conducted by the front supporting metal 12 and the rear supporting metal 22, and permeation-preventive work (function) to the sealed fluid is more improved. Further, the lip end portion 27b of the rear seal member 25 is inclined (as to diminish in diameter forward) with an inclination angle θ within a range of 10 ° ≦ θ ≦ 45 ° . The supporting metal has a slope receiving face 22a inclined with the same angle θ on its forth end. The slope receiving face 22a supports the lip end portion 27b from the rear side (low pressure side). The work and function of the slope receiving face 22a is the same as that of the front supporting metal 12. However, the supporting work (supporting function) of the slope receiving face 22a is mainly important in the static pressurized state of the rotation shaft 32.

Interference of the rear seal member 25 is also arranged to be 0 or minus in this case of Figure 2 to construct the seal as the tip end of the lip end portion 27b has an interval with the rotation shaft 32 or very slightly touches the rotation shaft 32.

And, in Figure 2, the cylindrical cover portion 27c, of which peripheral face is undulate in free state (unfitted state), is tightly fit to the cylinder portion 4 in assembly. Although the peripheral face of the cylindrical cover portion 27c in free state is shown with a continuous line (as to be undulate) in Figure 2, the peripheral face is elastically compressed as to be tightly fit to the inner face of the cylinder portion 4 in actual use. Fluid leakage between the cylinder portion 4 and the cylindrical cover portion 27c is prevented by effect of the undulation on the peripheral face of the cylindrical cover portion 27c. That is to say, bearing pressure on convex portions becomes high for the undulation on the peripheral face, and sealing effect is enhanced more than that without undulation.

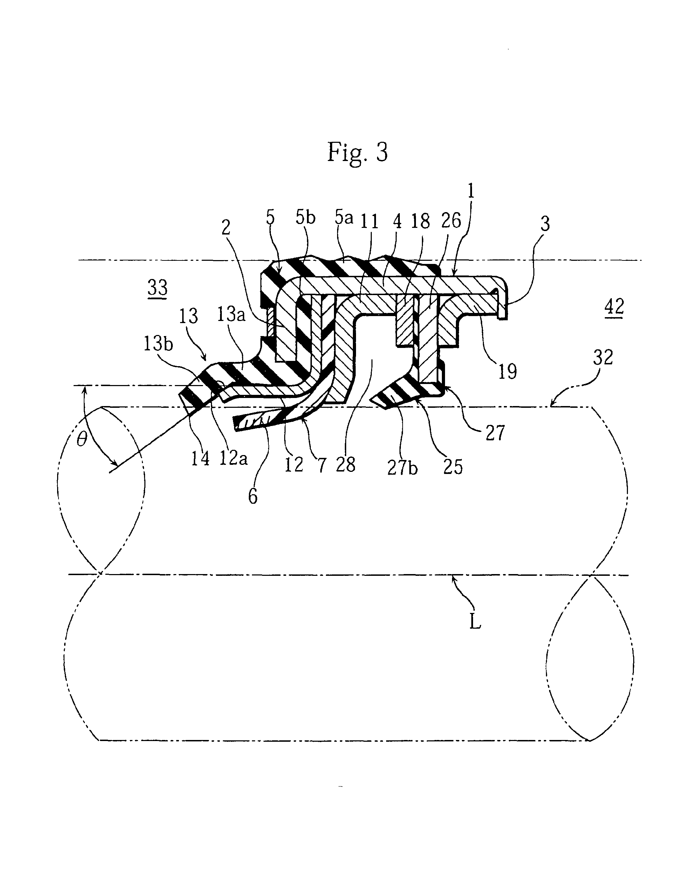

Next, in a third embodiment shown in Figure 3, length of the shaft seal in the longitudinal direction can be shorter than that of the embodiment in Figure 1. That is to say, the first inner case 9 and the first washer 10 are omitted to reduce thickness as a shaft seal (namely, the length in the axis L direction) for compactification.

In short, the seal element 7 is disposed along the rear face or the inner face of the supporting metal 12 in the third embodiment. Explanations on construction and working of the members shown by the same marks as that of the Figure 1 are omitted because the members are similarly constructed as that of the Figure 1.

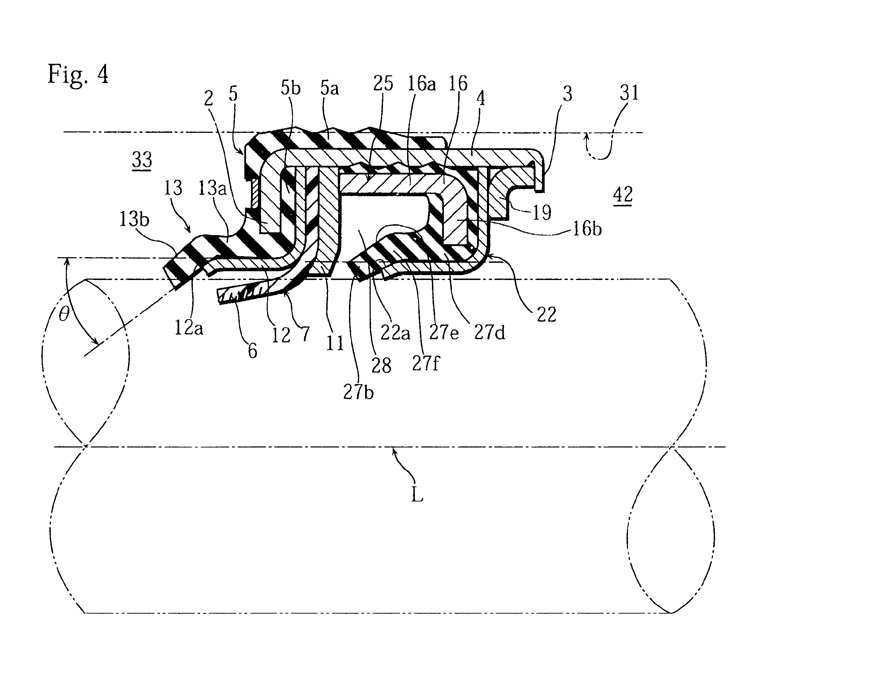

In a fourth embodiment shown in Figure 4, length in the axis L direction is shorter than that in the second embodiment. That is to say, the first inner case 9 and the first washer 10 are omitted to reduce thickness as a shaft seal (namely, the length in the axis L direction) for compactification.

In short, the seal element 7 is disposed along the rear face or the inner face of the supporting metal 12 in the fourth embodiment. Explanations on construction and working of the members shown by the same marks as that of Figure 2 are omitted because the members are similarly constructed as that of Figure 2.

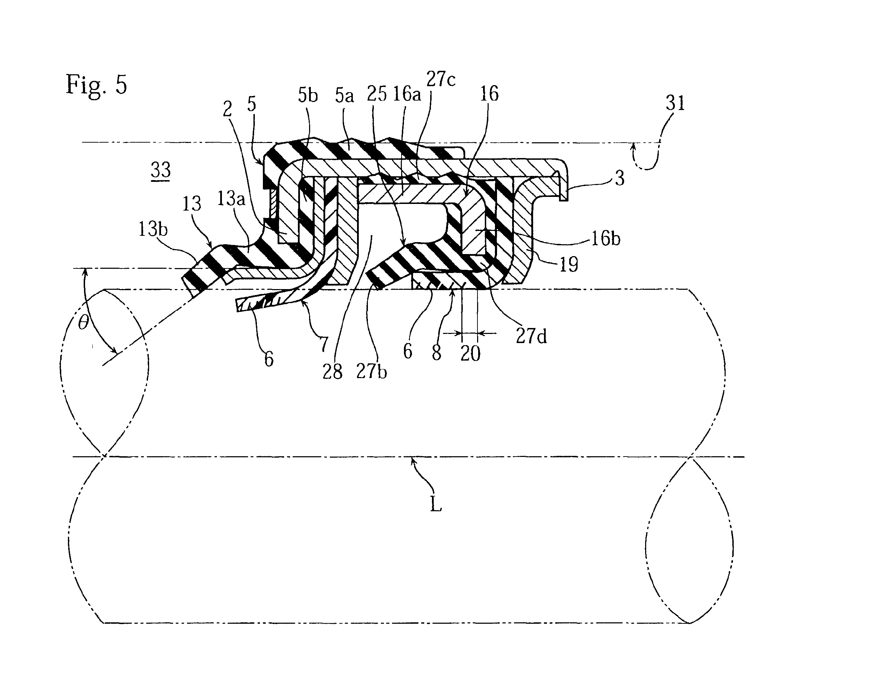

Next, in a fifth embodiment shown in Figure 5, a second seal element 8 is added instead of the supporting metal 22 in the embodiment shown in Figure 4 above. That is to say, this embodiment is provided with two seal elements, namely, the first seal element 7 on the front side and the second seal element 8 on the rear side with spiral grooves 6 made of synthetic resin. It is necessary to provide a flat contact portion (straight portion) 20, on which the spiral groove 6 does not exist, in the seal element 8 on the rear side.

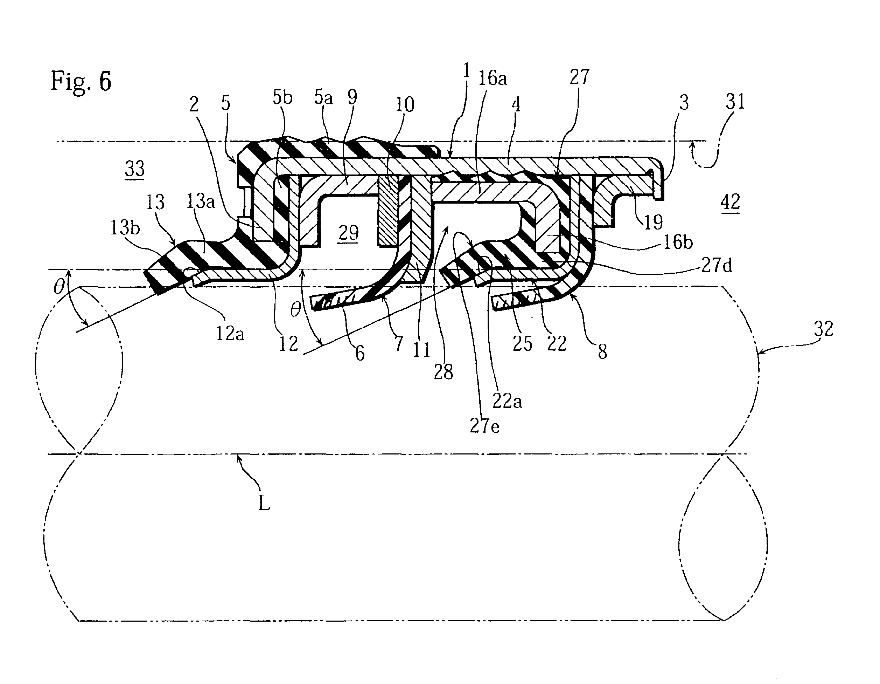

The second seal element 8 prevents slight leakage generated until the lip end portion 27b of the rear seal member 25 receives pressure and deforms. The flat contact portion (straight portion) 20 mentioned above is necessary for this prevention. In Figures 1 through 5 (and in Figure 6 described below), the (first) seal element 7 is preferably through type without the flat contact portion (straight portion) because of high pumping work (hydrodynamic effect). Naturally, the flat contact portion (straight portion) has similar pushback effect against the fluid when formed on the (first) seal element 7 for flow of the fluid generated by pressure difference. Explanations on the members shown by the same marks as that of Figure 4 are omitted because the members are similarly constructed as that of Figure 4.

Next, in a sixth embodiment shown in Figure 6, the second seal element 8 is added to the embodiment shown in Figure 2, and the other members are similarly constructed to that of Figure 2. The working (function) of the second seal element 8 is similar to that of Figure 5 above.

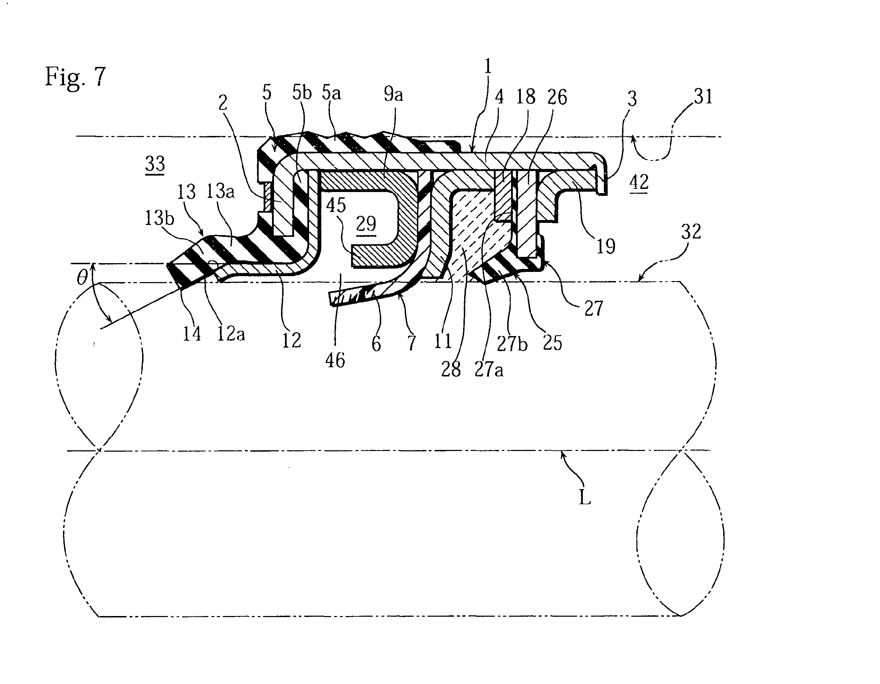

And, a seventh embodiment shown in Figure 7 has an inner case 9a in which the first inner case 9 and the first washer 10 in Figure 1 are made (unified) as one. The inner case 9a made of metal has a holding cylinder portion 45 of which inner portion is extended to the fluid storing chamber 33 side as to be parallel to the axis L and auxiliary function to formation of the seal element 7.

That is to say, in free state before the rotation shaft 32 is inserted, although the seal element 7 is a ring formed as the rotation shaft 32 is easily inserted, the seal element 7 is not perfectly formed. It depends on assembled state to curve (deform) the inner peripheral side of the seal element 7 along the peripheral face of the rotation shaft 32. Therefore, in the assembled state (attached state), contact face pressure of the seal element 7 on the rotation shaft 32 is high on a bent portion and decreasing as the seal element 7 comes close to the forth end of the holding cylinder portion 45, and the end of the seal element 7 may be lifted up (the end may be departed from the peripheral face of the rotation shaft 32) when the fluid pressure is high and pressure fluctuation is large. As shown in Figure 7, the seal element 7 is stably formed into right position and right configuration in assembly and tightly fit to the peripheral face of the rotation shaft 32 in high-pressure fluid by receiving a cylinder portion 46 on an inner peripheral side of the seal element 7 from the peripheral side.

One unit of the seal element 7 is shown in Figure 7. When two or more seal elements 7 are provided, similar inner case 9a is disposed to each of the seal elements 7.

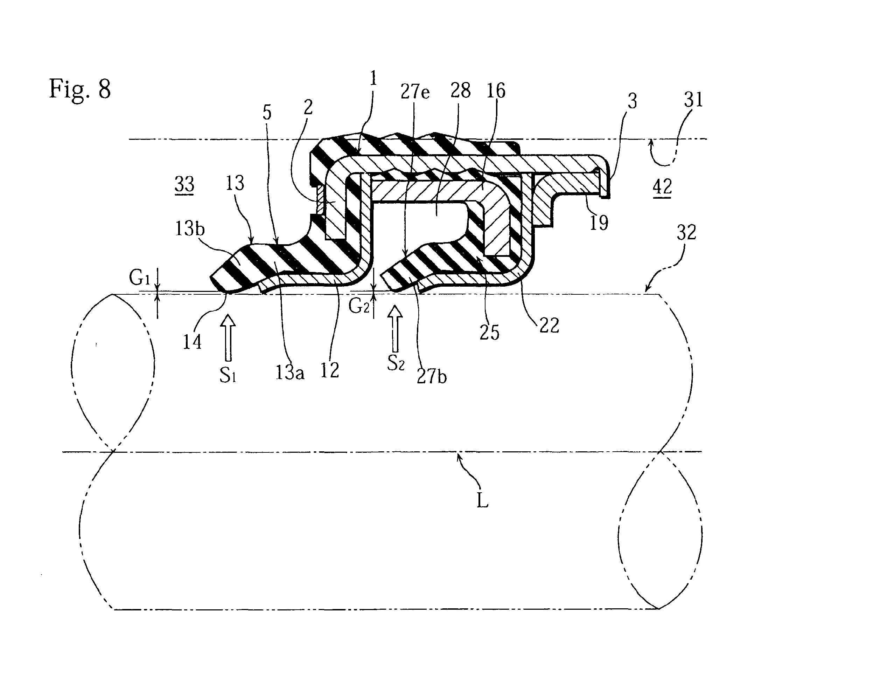

Next, in an eighth embodiment shown in Figure 8, the seal elements 7 and 8 in Figures 1 through 7 above are omitted. There are only two sealing portions S₁ and S₂ on which the seal contacts (slides on) the peripheral face of the rotation shaft 32 in the rotation state and/or the static state. And, the sealing portion S₁ is composed of the lip end portion 13b and the sealing portion S₂ is composed of the lip end portion 27b. Therefore, this makes the hollow chamber 28 one.

Further, an interference G₁ of the front seal member 5 is arranged to be zero or minus. That is to say, the tip end 14 forms no interval or micro interval with the rotation shaft 32 in unpressurized state. And, interference G₂ of the rear seal member 25 is (as described with Figures 1 through 7) arranged to be zero or minus. The interferences G₁ and G₂ are preferably set to be in a range of 0 to -0.5mm.

And, in Figure 8, supporting metals 12 and 22 to prevent the permeation of the sealed fluid (such as CO₂) and to respectively support the lip portion 13 of the front seal member 5 and the lip portion 27e of the rear seal member 25 from the rear face or the inner face are provided. The permeation preventive work against the cooling medium gas is improved further by the two supporting metals (backup metals) 12 and 22. And, in Figure 8, explanations on the other members, similar to that of Figures 1 through 7 described above, are omitted.

To describe working (operation) of the embodiment of Figure 8, although the cooling medium gas (fluid) leaks for a moment in charging the cooling medium gas because the interferences G₁ and G₂ are zero or minus, once the pressure becomes about 1 to 1.5MPa, the lip end portion 13b of the front seal member 5 is deformed and the tip end 14 tightly contacts the rotation shaft 32, and the leakage is stopped thereby.

The fluid momentarily leaked from the front seal member 5 flows into the hollow chamber 28 and pressurizes the lip end portion 27b of the rear seal member 25 to fit to the rotation shaft 32.

Even if high pressure of 3 to 12MPa works on the front seal member 5 from the fluid storing chamber 33 in operation (rotation), for example, the pressure sealed in the hollow chamber 28 by the rear seal member 25 exists, the pressure working on the lip end portion 13b of the front seal member 5 is reduced for the pressure in the hollow chamber 28, and life of the seal is extended thereby.

In this case, abrasion-reducing effect is remarkable because the interferences G₁ and G₂ of the lip nd portions 13b and 27b are zero or minus in initial stage. And, the lip end portion 27b of the rear seal member 25 can keep lubrication by the leakage from the lip end portion 13b (on the front side). And, working effect of lubrication and heat-restriction of the lip end portion 13b (on the front side) is remarkable for the fluid in the hollow chamber 28.

And, practically in Figure 8, the interference G₂ on the atmosphere side 42 may be preferably arranged to be larger than the interference G₁ on the fluid storing chamber 33 side to certainly prevent the leakage toward the atmosphere side 42. For example, G₁ is set to be -0.5mm to Omm and G₂ is set to be -0.5mm to +0.1mm as to make G₁ < G₂.

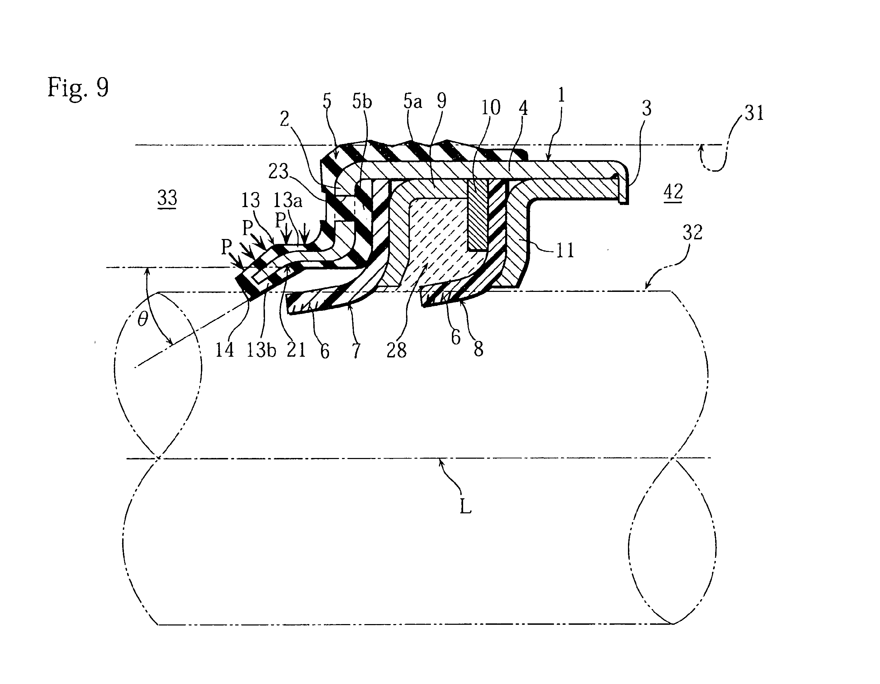

Next, Figure 9 shows a ninth embodiment which is composed of an outer case 1 made of metal, a front seal member 5, a first seal element 7, a second seal element 8, a first inner case 9, a first washer 10, a second inner case 11, and a reinforcing metal 21 (made of metal such as steel) unitedly attached to, concretely, unitedly formed with an inner brim portion 2 of the outer case 1. Explanations on construction and working of the members shown by the same marks as that of the Figures 1 through 8 are omitted because the members are similarly constructed as that of the Figures 1 through 8.

The reinforcing metal 21 is inserted to the lip end portion 13b and continuing to the inner brim portion 2 of the outer case 1. Concretely, the reinforcing metal 21 having an L-shaped bent cross section as to correspond to the lip portion 13 is attached to a part inside the lip portion 13 from the lip end portion 13b to the short cylinder portion 13a and continuing to the inner brim portion 2. In other words, the lip portion 13 is covering both of the inner and outer faces of the reinforcing metal 21.

And, the reinforcing metal 21 is not extended for the whole length of the lip end portion 13b, but to a position before an end portion including the tip end 14 of the lip end portion 13b.

Therefore, when high pressure works in an arrow P direction, excessive deformation of the whole lip end portion 13b is restricted to prevent area contact with the rotation shaft 32. That is to say, the end portion (the portion to which the reinforcing metal 21 is not inserted) of the lip end portion 13b is deformed (ideally) by the pressure, the tip end 14 of the lip end portion 13b makes an appropriate line contact with the rotation shaft 32, and high tightness (sealability) is secured thereby.

In other words, the lip portion 13 (the lip end portion 13b) can maintain similar behavior (deformation) under high pressure to that under low pressure (as in a conventional compressor), abrasion on the sliding face of the rotation shaft 32 is reduced, and durability of the seal is made excellent thereby. Especially, contact area in which the tip end 14 slides on the rotation shaft 32 is prevented from spreading, heat generation and abrasion are prevented, and the life of the front seal member 5 is extended.

And, the reinforcing metal 21 and the inner brim portion 2, disposed inside the entire front seal member 5 except an area near the tip end 14, are playing a role (work or function) as a gas-shielding member. That is to say, the role (work or function) of the reinforcing metal 21 (and the inner brim portion 2) as the gas-shielding member becomes important when cooling medium gas having relatively high permeability against rubber and resin such as CO₂ is used as the fluid in the fluid storing chamber 33.

A forming hole portion 23 is preliminarily formed on the inner brim portion 2 or the reinforcing metal 21 of the outer case 1 to make the unification with the front seal member 5 stronger. Further, rubber is easily and sufficiently filled in the rear side (inner side) of the inner brim portion 2 or the reinforcing metal 21 through the forming hole portion 23 in production of the front seal member 5, and the rubber on the rear side of the inner brim portion 2 or the reinforcing metal 21 can be completely formed. Therefore, a gap between the front seal member 5 and the first seal element 7 is filled up for tight fit, and the fluid in the fluid storing chamber 33 is prevented from leaking between the front seal member 5 and the first seal element 7 toward the low pressure side (atmosphere side) 42.

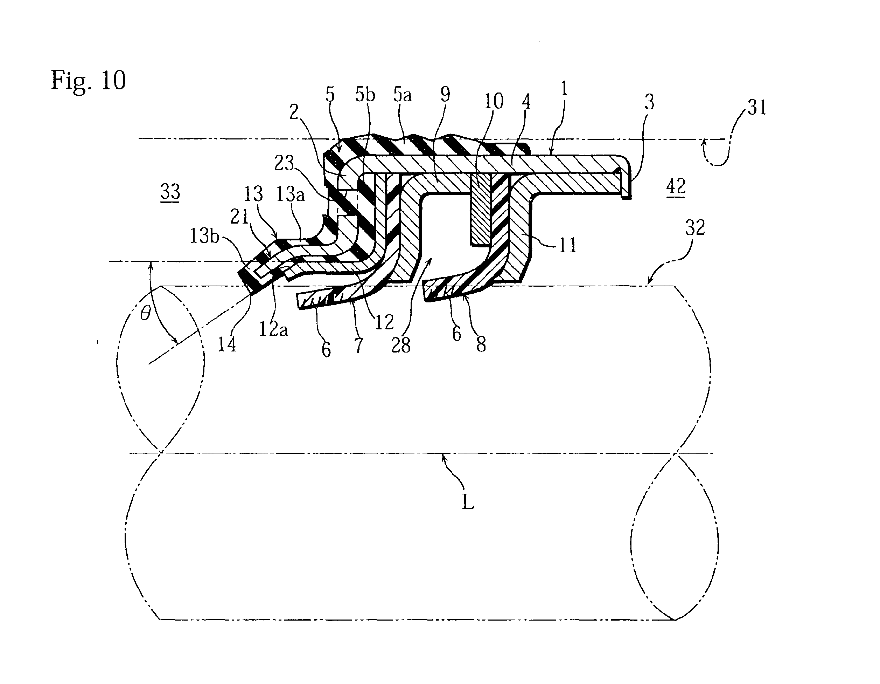

Next, Figure 10 shows a tenth embodiment of the present invention. Comparing with the ninth embodiment in Figure 9, it is different in a construction in which a supporting metal 12, holding a back face or inner face of the front seal member 5, is provided. (Explanations on the same constructions shown with the same marks to that of the ninth embodiment are omitted.)

As shown in Figure 10, the slope receiving face 12a of the supporting metal 12 tightly fits to and holds the back face (inner face) of the lip end portion 13b to prevent excessive deformation of the lip end portion 13b under pressure, and excellent sealability (tightness) and durability is demonstrated thereby. Further, the supporting metal 12 brings synergistic effect working with the reinforcing metal 21.

And, the supporting metal 12 tightly fits to (contact) whole area of the back face or inner face of the front seal member 5 except near the tip end 14 to play a role (work or function) as a gas-shielding member. Further, the supporting metal 12 brings synergistic effect working with the reinforcing metal 21.

Further, rubber is completely filled between the reinforcing metal 21 and the supporting metal 12 through the forming hole portion 23 in production of the front seal member 5, a gap between the front seal member 5 and the supporting metal 12 is filled up for tight fit, and the fluid in the fluid storing chamber 33 is prevented from leaking between the front seal member 5 and the supporting metal 12 toward the low pressure side (atmosphere side) 42.

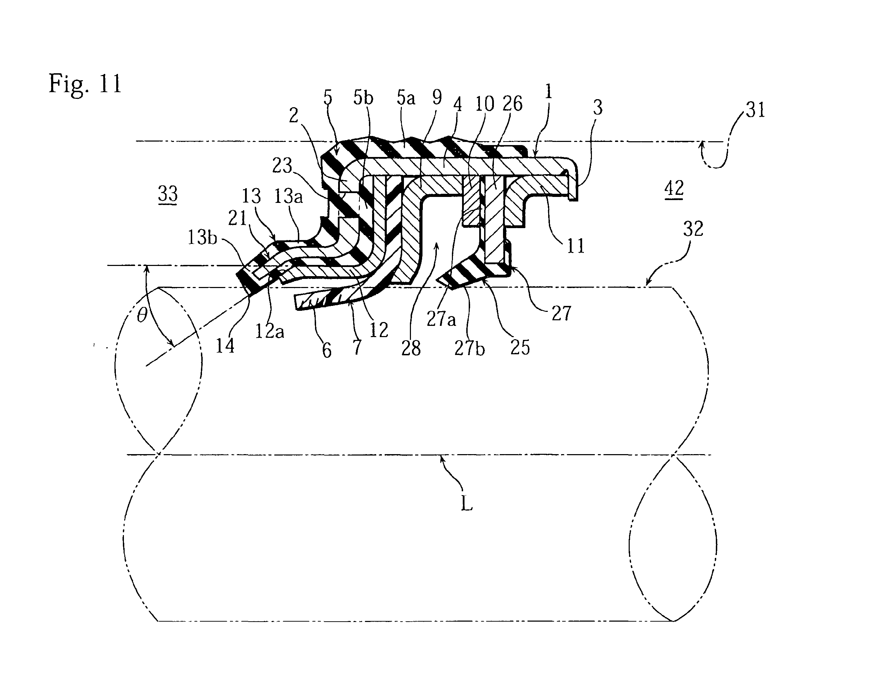

Next, Figure 11 shows a eleventh embodiment of the present invention in which a rear seal member 25 as in Figure 1 is disposed on the low pressure side (atmosphere side) 42 instead of the second seal element 8 in the embodiment shown in Figure 10. The working (function) of the rear seal member 25 is same as that in Figure 1.

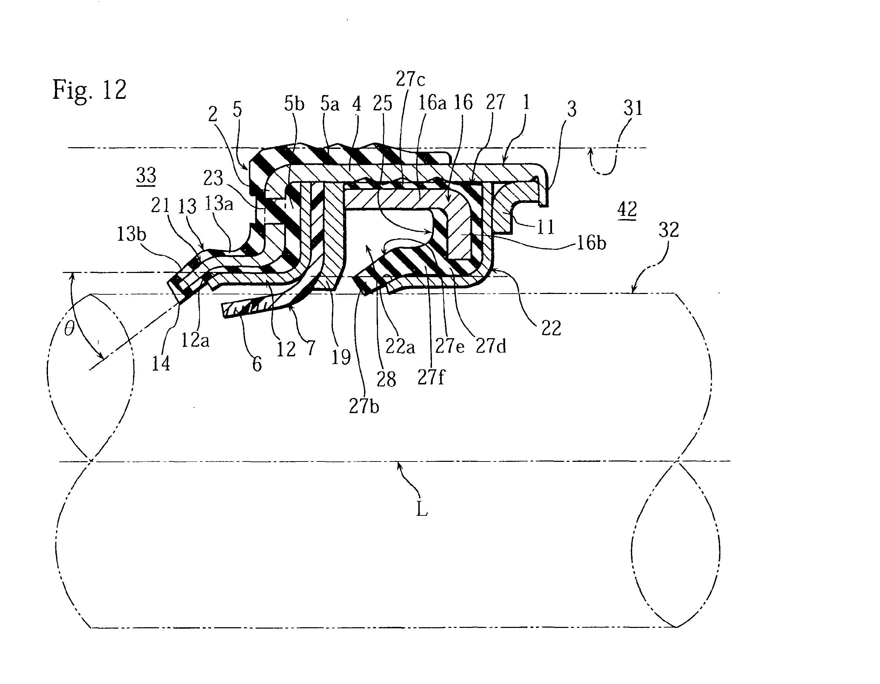

Next, Figure 12 shows a twelfth embodiment of the present invention. Comparing with the eleventh embodiment in Figure 11, following constructions are clearly different. (Explanations on the same members shown with the same marks are omitted.)

That is to say, the rear seal member 25 and supporting members disposed on the low pressure side (atmosphere side) 42 are different. And, a third inner case 19 (made of metal such as steel) is disposed right after the first seal element 7. Concretely, in the rear seal member 25, configurations of the rubber portion 27 and the metal portion 16 are similar to that of Figure 2, and the supporting metal 22 is similar to that of Figure 2 of which work (function) is similar to that of Figure 2.

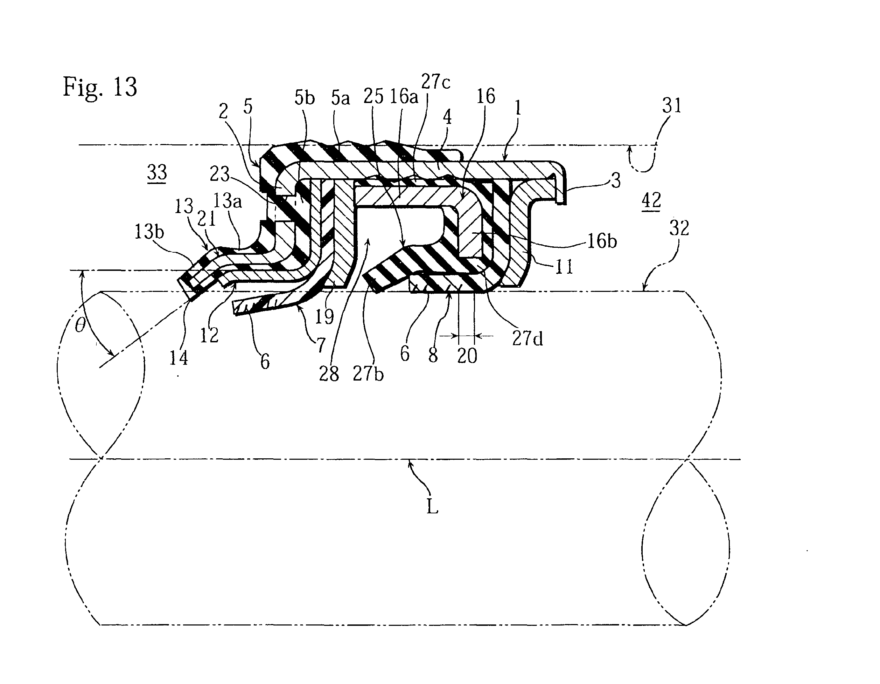

Next, Figure 13 shows a thirteenth embodiment of the present invention. Comparing with the twelfth embodiment in Figure 12, following constructions are clearly different. (Explanations on the same members shown with the same marks are omitted.)

That is to say, a second seal element 8 similar to that of Figure 5 is added instead of the supporting metal 22 in the embodiment shown in Figure 12. The working (function) of the second seal element 8 is same as that in Figure 5.

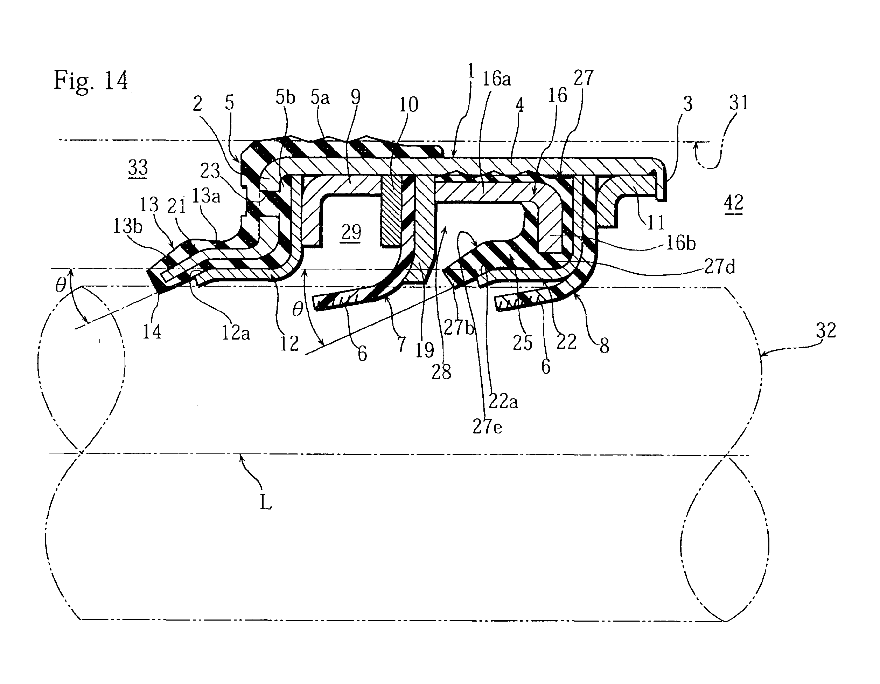

Next, Figure 14 shows a fourteenth embodiment of the present invention. Comparing with the twelfth embodiment in Figure 12, following constructions are clearly different. (Explanations on the same members shown with the same marks are omitted.)

That is to say, a first inner case 9, a first washer 10, and a second seal element 8 are added to the embodiment of Figure 12. Concretely, the first inner case 9 and the first washer 10 are disposed between the supporting metal 12 and the first seal element 7 shown in Figure 12 to form a front hollow chamber 29. And, the second seal element 8 is disposed as to tightly fit between the second supporting metal 22 and the second inner case 11.

The first seal element 7 sends the fluid filled in the rear hollow chamber 28 in the static state to the front hollow chamber 29 and the fluid storing chamber 33 side with pumping work (hydrodynamic effect) of the spiral groove 6. And, the work (function) of the second seal element 8 is similar to that in the embodiment of Figure 5.

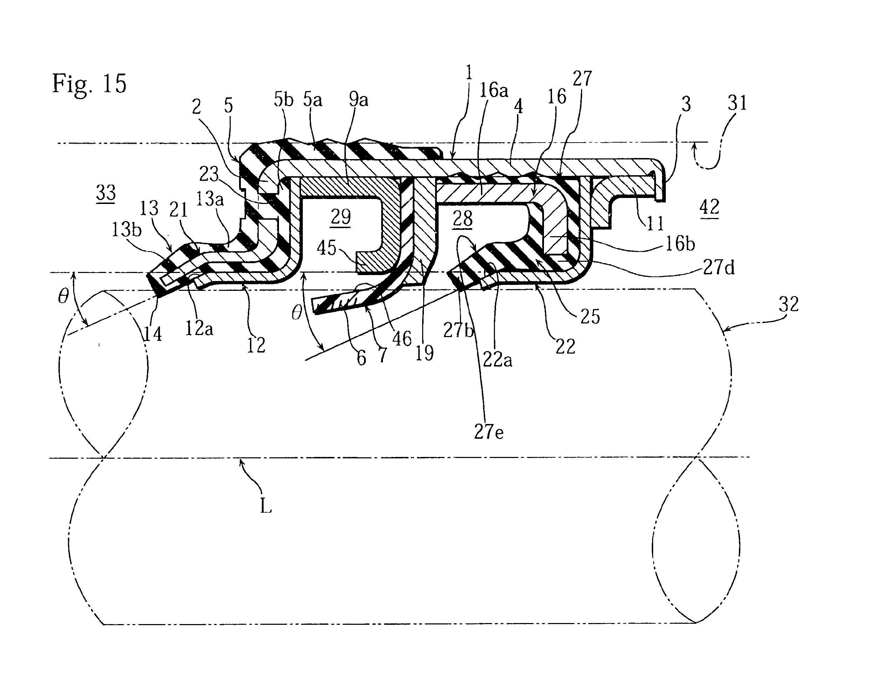

Next, Figure 15 shows a fifteenth embodiment of the present invention. Comparing with the fourteenth embodiment in Figure 14, following constructions are clearly different. (Explanations on the same members shown with the same marks are omitted.)

That is to say, an inner case 9a similar to that of Figure 7 is added instead of the first inner case 9 and the first washer 10 in Figure 14. The working (function) of the inner case 9a is similar to that of the embodiment in Figure 7. And, the second seal element 8 shown in Figure 14 is omitted.

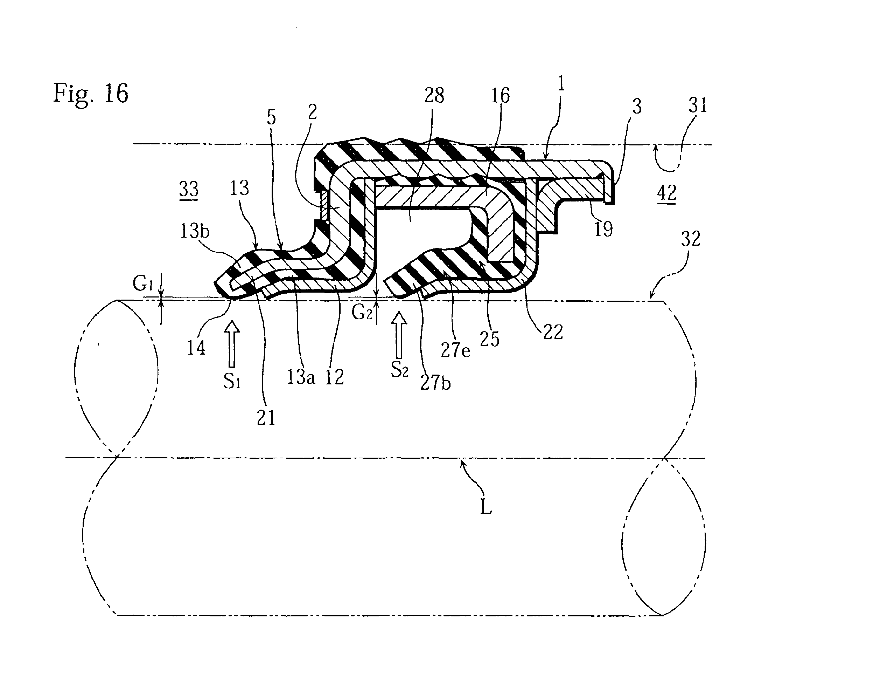

Next, Figure 16 shows a sixteenth embodiment of the present invention. Comparing with the eighth embodiment in Figure 8, it is different in that a reinforcing metal 21 are embedded in the lip end portion 13b of the front seal member 5. Explanations on constructions and functions of the same members shown by the same marks as in Figure 8 are omitted.

All of the above-described embodiments in Figures 1 through 7 and Figures 11 through 15 can be generally expressed as follows. They may be expressed as that a "base seal portion" is formed with the front seal member 5 having the lip end portion 13b of rubber and the (first) seal element 7 of resin, and the rear seal member 25 having the lip end portion 27b of rubber is disposed on the low pressure side 42 behind the "base seal portion". And, the "base seal portion" seals in rotation (operation) of the rotation shaft 32, and the lip end portion 27b of the rear seal member 25 stops the fluid about to leak toward the low pressure side 42 when the rotation shaft 32 is stopped (static).

For example, when cooling media (fluid) such as CO₂ are used in a compressor for an air conditioner on an automobile, pressure is generally higher than that in conventional compressors. The pressure becomes low (to 3.5MPa, for example) in rotation (operation) and high (to 6MPa) in the static state.

When the pressure in the fluid storing chamber 33 becomes high in the static state as described above, the fluid (such as CO₂) is sent out of the "base seal portion" and stored in a space of the (rear) hollow chamber 28. The rear seal member 25 has the lip end portion 27b of rubber which is pressed to the rotation shaft 32 in the static state and elastically deformed by the high pressure for sealing to prevent the fluid from leaking. In Figures 11 through 15, although the front seal member 5, having the lip end portion 13b in which the reinforcing metal 21 is embedded, prevents the fluid (such as CO₂) from leaking by restriction of area contact with the rotation shaft caused by excessive deformation of the lip end portion 13b, the fluid, which is still leaking, is sent out of the "base seal portion" and stored in the space of the hollow chamber 28.

Then, when the rotation shaft 32 rotates, the fluid is pushed back to the fluid storing chamber 33 side from the (rear) hollow chamber 28 because the pressure on the fluid storing chamber 33 side decreases (as described above). In this case, the fluid is pushed back to the fluid storing chamber 33 side early and more certainly by pumping work (hydrodynamic effect) of the spiral groove (thread) 6 of the seal element 7.

Further, the lip end portion 27b of the rear seal member 25 of which interference is 0 (or minus) has sealability not in unpressurized state but in the static pressurized state in which high pressure works while the rotation shaft is static. Further, the lip end portion 27b is deformed as to part from the surface of the rotation shaft 32 in rotation, and durability is also enhanced (improved).

The present invention, not restricted to the embodiments above, may be modified. For example, the technical idea of Figures 8 and 11 that the interference G₁ of the front seal member 5 is made 0 or minus may be applied to each of Figures 1 through 7 and Figures 9 through 15. Further, the reinforcing metal 21 of the front seal member 5 may be embedded in the lip end portion 27b of the rear seal member 25. And, with omission of the reinforcing metal 21 of the front seal member 5, the reinforcing metal 21 may be embedded only in the rear seal member 25 (not shown in Figures).

According to the shaft seal of the present invention, excellent sealability is obtained not only in rotation but in the static state of the rotation shaft 32. Especially, this shaft seal is appropriate to a compressor for an air conditioner on an automobile in which pressure becomes higher in the static state (than in rotation).

And, a shaft seal having a compact and simple construction with shortened dimension in the axis direction is obtained. Despite the simple and compact construction, the shaft seal has excellent sealing ability in both of the rotation state and the static state.

And, a long-life seal is obtained by reducing abrasion of the front seal member 5 and the rear seal member 25 under harsh conditions in which the rotation shaft 32 rotates in high rotational frequency and high pressure works on the seal.

And, according to the shaft seal of the present invention, the excessive deformation, caused by the pressure (especially, high pressure) working on the lip end portion 13b, is restricted, area contact on the rotation shaft 32 is prevented to make a line contact for keeping stable sealability, and early abrasion of the lip end portion 13b is prevented for extending the life of the shaft seal.

And, the reinforcing metal 21, continued to the inner brim portion 2 of the outer case 1, is having high rigidity and stable position, and formed easily (unitedly). The excessive deformation of the lip end portion 13b caused by the pressure is certainly restricted thereby.

And, forming defection of the front seal member 5 is prevented in production, and this makes the shaft seal excellent in sealability.

And, the rotation shaft 32 in rotation is sealed by the front seal member 5, the rear seal member 25 is in a rest state, early abrasion on the lip end portion of the rear seal member 25 is prevented for extending the life of the shaft seal to obtain durable leakage prevention in the static state.

And, the problem that the cooling media such as CO₂ permeate rubber material is certainly solved. And, excessive deformation (distortion) of the lip portions 13 and 27e is prevented under conditions with high pressure fluctuation.

Further, the seal element 7 of flat ring in free state is certainly assembled (attached) curved along the peripheral face of the rotation shaft 32 as to form the cylinder portion on the inner peripheral side in regular configuration. Therefore, stable and excellent sealability is kept under high and fluctuant fluid pressure.

While preferred embodiments of the present invention have been described in this specification, it is to be understood that the invention is illustrative and not restrictive, because various changes are possible within the spirit and indispensable features.

## Claims

1. A shaft seal comprising a front seal member (5) disposed on a fluid storing chamber (33) side and having a lip end portion (13b) of rubber which slides on a rotation shaft (32) in rotation, and a rear seal member (25) disposed on a low pressure side (42) and having a lip end portion (27b) which contacts the rotation shaft (32) in static state.

2. A shaft seal comprising a seal element (7) disposed between a housing (31) and a rotation shaft (32) and sliding on the rotation shaft (32), a front seal member (5) disposed on a fluid storing chamber (33) side to the seal element (7) and having a lip end portion (13b) of rubber which slides on the rotation shaft (32) in rotation, and a rear seal member (25) disposed on a low pressure side (42) and having a lip end portion (27b) which contacts the rotation shaft (32) in static state.

3. The shaft seal as set forth in claim 1, wherein only two sealing positions are respectively composed of the lip end portion (13b) of rubber of the front seal member (5) and the lip end portion (27b) of rubber of the rear seal member (25).

4. The shaft seal as set forth in claim 1, 2, or 3, wherein an interference (G₁) of the front seal member (5) and an interference (G₂) of the rear seal member (25) are arranged to be 0 or minus.

5. A shaft seal comprising a front seal member (5) disposed on a fluid storing chamber (33) side and having a lip end portion (13b) of rubber sliding on a rotation shaft (32) in rotation in which a reinforcing metal (21) is embedded.

6. A shaft seal comprising a seal element (7) disposed between a housing (31) and a rotation shaft (32) and sliding on the rotation shaft (32), a front seal member (5) disposed on a fluid storing chamber (33) side to the seal element (7) and having a lip end portion (13b) of rubber sliding on the rotation shaft (32) in rotation in which a reinforcing metal (21) is embedded, and an outer case (1) of metal of which inner brim portion (2) is continuing to the reinforcing metal (21).

7. The shaft seal as set forth in claim 6, wherein a forming hole portion (23) is formed on the inner brim portion (2) of the outer case (1) or the reinforcing metal (21).

8. The shaft seal as set forth in claim 5, 6, or 7, wherein a rear seal member (25), disposed on a low pressure side (42) and having a lip end portion (27b) which contacts the rotation shaft (32) in static state, is provided.

9. The shaft seal as set forth in claim 1 or 2, wherein an interference (G₂) of the rear seal member (25) is arranged to be smaller than an interference (G₁) of the front seal member (5).

10. The shaft seal as set forth in claim 9, wherein the interference (G₂) of the rear seal member (25) is arranged to be 0 or minus.

11. The shaft seal as set forth in claim 1, 2, 3, 5, 6, or 7, wherein a supporting metal (12) which supports a lip portion (13) having the lip end portion (13b) from a back face or an inner face and prevents permeation of sealed fluid.

12. The shaft seal as set forth in claim 1, 2, 5, or 6, wherein at least one of seal elements (7, 8) of flat ring in free state of which inner peripheral side is curved along a peripheral face of the rotation shaft (32) in attached state is provided, and at least one of inner cases (9, 11) of metal, supporting at least one of the seal elements (7, 8) from the fluid storing chamber (33) side, has a holding cylinder portion (45) for receiving a cylinder portion (4) on the inner peripheral side of the seal element curved along the peripheral face of the rotation shaft (32).
